# EUROPEAN PATENT SPECIFICATION

(11) **EP 3 199 439 B1**
(45) Date of publication and mention of the grant of the patent: **01.05.2019**
(21) Application number: 14902575.1
(22) Date of filing: 18.11.2014
(51) Int. Cl.: B62M 6/50, G01L 3/00

(54) **MIDDLE-MOUNTED MOTOR OF AN ELECTRIC BICYCLE AND MOMENT SENSING DEVICE THEREOF**
MITTIG-MONTIERTER MOTOR EINES ELEKTROFAHRRADS UND DREHMOMENTMESSVORRICHTUNG DAFÜR
MOTEUR À MONTAGE CENTRAL D'UNE BICYCLETTE ÉLECTRIQUE ET DISPOSITIF DE DÉTECTION DE COUPLE DE CELUI-CI

(30) Priority: 25.09.2014 CN 201410498758
(43) Date of publication of application: 02.08.2017
(73) Proprietor: Suzhou Industrial Park Tongsheng Bicycle Co., Ltd., Suzhou, Jiangsu 215124 (CN)
(72) Inventor: MA, Qingyi, Suzhou, Jiangsu 215124 (CN)
(74) Representative: EP&C
(86) International application number: PCT/CN2014/091373
(87) International publication number: WO 2016/045181

(56) References cited:
- EP-A1- 1 923 683
- WO-A1-2014/103212
- CN-A- 103 879 505
- CN-A- 103 879 506
- CN-U- 201 834 167
- CN-U- 201 834 167
- CN-U- 203 780 726
- CN-U- 203 844 937
- CN-U- 203 844 937
- CN-U- 204 368 387
- JP-A- H09 105 686

## Description

### FIELD OF THE INVENTION

The present invention relates to a torque sensing device of an electric-bike central motor and an electric-bike central motor having this torque sensing device.

### BACKGROUND OF THE INVENTION

In order to allow the drive motor of an electric bike to adjust the output power according to the magnitude of the pedaling force, a central-shaft torque sensing device is usually provided on some top-grade electric bikes. The existing central-shaft torque sensing device of an electric bike commonly has the problems of complex structure, big size, weak signals and poor stability. There are also relatively small central-shaft torque sensing devices, but they basically work on a single side (i.e., the left foot pedals hard while the right foot does not), or the so-called working on both sides only allows detection of tension of the chain, with the accuracy and reliability thereof not able to compare with a real torque sensor.

There are a variety of ways to lead out a torque signal of the central-shaft torque sensing device of a bike, such as an inductive type, a slip-ring type, a photoelectric type, a phase difference type in which two Hall switches are used for leading out the signal and detecting the phase difference between them, and even a direct type in which the signal is directly led out by a linear Hall element. These solutions all have their own advantages and disadvantages. For example, the inductive type is simple in structure, but has a weak signal, large zero drift and poor anti-interference performance; the photoelectric type is poor in anti-interference performance and water resistance; the slip-ring type is simple in structure, but friction may be caused between the slip ring and the carbon brush or other contacts, which will affect the life and reliability; the phase difference type can neither output an accurate signal when the vehicle stops, nor allow zero starting; using a sensor directly led out by a linear Hall element has high requirements on the mechanism, with consistency and stability of the product difficult to be controlled.

Document CN 203 844 937 U shows the preamble of claim 1.

### CONTENTS OF THE INVENTION

In order to solve the above problems, a purpose of the present invention is to provide a central-shaft torque sensing device of an electric bike having simple structure and stable performance, and also provide a central motor structure having this torque sensing device.

A technical solution of the present invention is as follows: A torque sensing device of an electric-bike central motor is provided, comprising a central shaft going through a five-way tube of the bike, a shaft sleeve that is disposed around this central shaft and will be circumferentially deformed when subjected to a circumferential torsional force, and a chain wheel disposed around the shaft sleeve, the shaft sleeve being provided with a torque sensing assembly that can sense magnitude of the circumferential torsional force to which the shaft sleeve is subjected, the torque sensing assembly being connected to a motor controller of the bike via an outlet device; the outlet device is composed of a movable magnetic core, a movable coil fixed on the movable magnetic core, a static magnetic core, and a static coil fixed on the static magnetic core, which are all of an annular structure, wherein the movable magnetic core is fixed to the shaft sleeve, the static magnetic core is fixed relative to the five-way tube of the bike, the movable magnetic core fits in contact with the static magnetic core and is rotatable relative thereto, the movable coil is connected to the torque sensing assembly via a movable coil lead, and the static coil is connected to the motor controller via a static coil lead.

Based on the above technical solution, this torque sensing device of the present invention also includes the following preferred technical solution:
It is not claimed, that the movable magnetic core and the static magnetic core, both having a U-shaped axial section, fit to each other to compose an annular structure having a mouth-shaped axial section, in which the movable coil and the static coil are accommodated.

It is not claimed, that the movable coil is fixed to the movable magnetic core by glue, and so is the static coil fixed to the static magnetic core.

It is not claimed, that sticker is bonded on a surface of the movable magnetic core and the static magnetic core where they fit in contact with each other.

The movable magnetic core is mounted on the shaft sleeve via a movable seat board.

It is not claimed, that the torque sensing assembly includes a torque sensing magnet steel and a Hall torque sensor corresponding thereto; the shaft sleeve is provided on the wall in the circumferential direction with a non-closed notch, the torque sensing magnet steel being fixed on one side of the notch, the Hall torque sensor being fixed on the other side of the notch; a torque signal output line is connected to the Hall torque sensor.

A Hall element on the Hall torque sensor is disposed on the side thereof close to the torque sensing magnet steel.

It is not claimed, that the torque sensing device further includes a speed sensing magnet steel and a Hall speed sensor corresponding thereto, wherein the speed sensing magnet steel is fixed on an annular magnet steel seat that is fixed relative to the movable magnetic core, and the Hall speed sensor is fixed relative to the five-way tube of the bike.

An electric-bike central motor having the above torque sensing device is provided, comprising a motor connecting tube fixedly going through the five-way tube of the bike, and a housing and a base integrated with the motor connecting tube; the base is provided with three annularly distributed positioning holes, in which are fixed circumferentially the static magnetic core via three positioning blocks.

Based on the above technical solution, this electric-bike central motor of the present invention also includes the following preferred technical solution:
Three annularly distributed springs are provided between the static magnetic core and the base, applying an axial elastic force to the static magnetic core toward the direction of the movable magnetic core.

The present invention has the following advantages:
1. This torque sensing device of the present invention is deformed when subjected to a force with the help of the shaft sleeve mounted between the central shaft and the chain wheel, then makes the relative position of the torque sensing magnet steel and the Hall torque sensor changed, and then senses the magnitude of the torque to which the central shaft is subjected, with the torque transferred in place; with the integral structure, this torque sensing device of the present invention will not have the defect of an unstable sensed signal when the torque is weak, but can always guarantee high sensitivity and high accuracy of the sensed signal.
2. This torque sensing device of the present invention, with the outlet device therein having a magnetic inductive type structure, has more reliable performance, stable signal transmission, and reduced friction loss.

### BRIEF DESCRIPTION OF THE DRAWINGS

The present invention will be further described below with reference to drawings and examples.
Fig. 1 is a schematic drawing of the overall structure of the electric-bike central motor using this torque sensing device of the present invention;
Fig. 2 is a schematic drawing of the partial structure of the electric-bike central motor using this torque sensing device of the present invention;

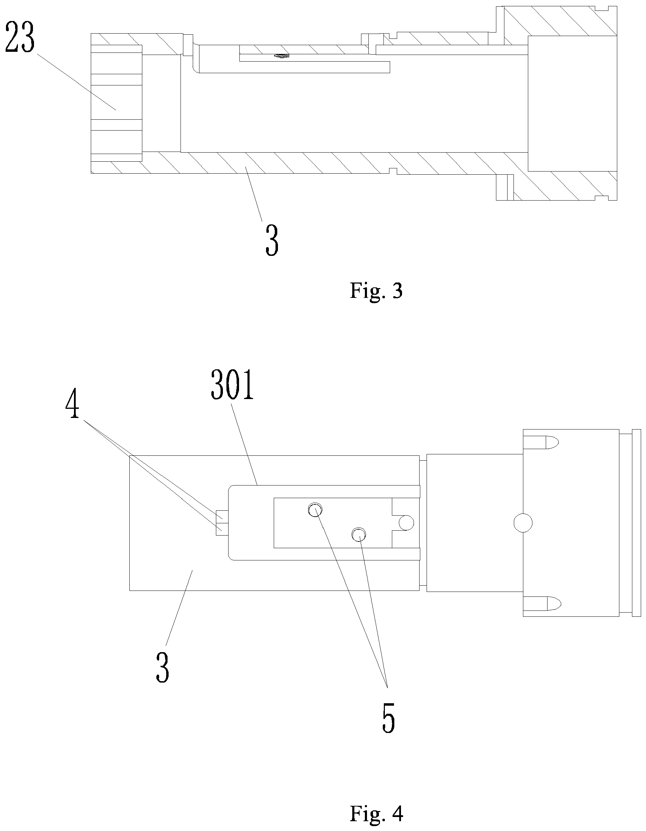

Fig. 3 is a schematic drawing of the cross-sectional structure of the shaft sleeve; and
Fig. 4 is a schematic drawing of the planar structure of the shaft sleeve.

List of reference numbers: 1. a central shaft; 2. a chain wheel; 3. a shaft sleeve; 301. a notch; 4. a torque sensing magnet steel; 5. a Hall torque sensor; 6a. a movable magnetic core; 6b. a movable coil; 6c. a movable coil lead; 6d. a movable seat board; 7a. a static magnetic core; 7b. a static coil; 7c. a static coil lead; 8. a bearing; 9. a torque signal output line; 10. a torque signal lead; 11. a housing; 12. a stator; 13. a rotor; 14. a motor shaft tooth; 15. a nylon gear; 16. a small gear; 17. a big gear; 18. a first one-way bearing; 19. a second one-way bearing; 20. a base; 21. a speed sensing magnet steel; 22. a Hall speed sensor; 23. a spline; 24. a motor connecting tube; 25. a locknut; 26. a motor controller; 27. a reinforcing plate; 28. a fixing plate; 29. a sticker; 30. a positioning block; 31. a spring; and 32. an annular magnet steel seat.

### DETAILED DESCRIPTION OF THE EMBODIMENTS

Example: In order to make people understand the technical contents of the present invention more clearly and visually, the technical contents of the present invention will be specifically elaborated below by taking an electric-bike central motor provided with this torque sensing device of the present invention as a specific example.

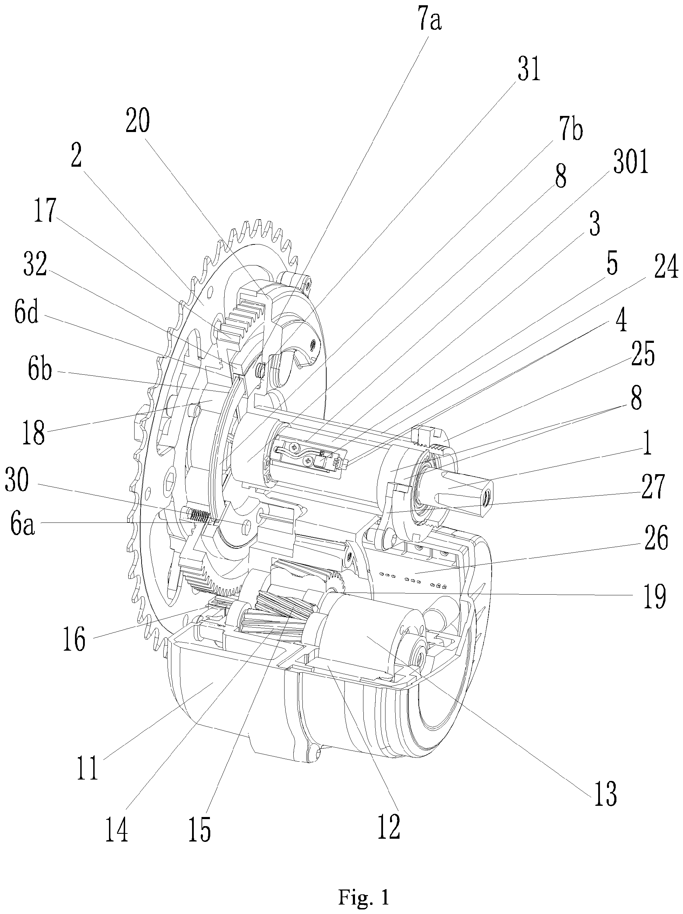

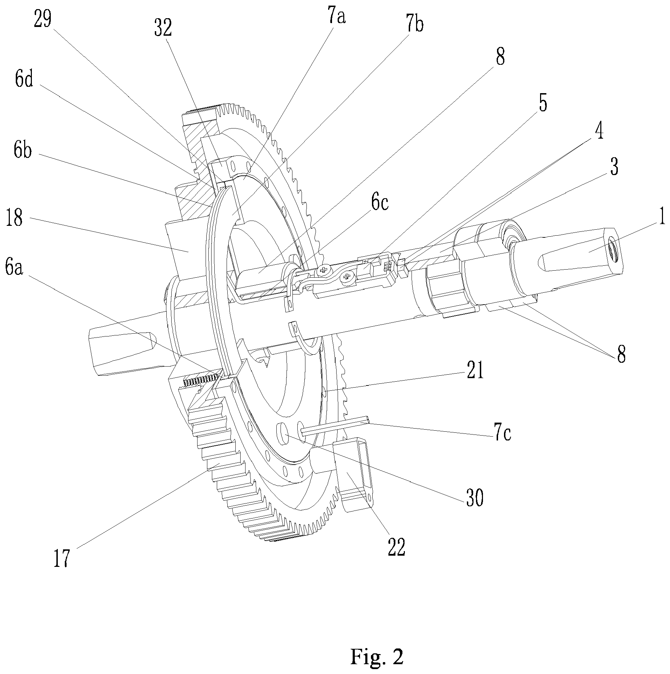

Figs. 1 and 2 are a structural schematic drawing of an electric-bike central motor using this central-shaft torque sensing device of a bike of the present invention, wherein this central motor includes a housing 11, a base 20 and a motor connecting tube 24, with the housing 11 and the base 20 both integrated with the motor connecting tube 24. In assembling, with the motor connecting tube 24 provided with an external thread on one end, letting the motor connecting tube 24 go through the five-way tube (not shown in the drawing) of the bike to make the threaded end of the motor connecting tube 24 extend out of the five-way tube, and then locking the locknut 25 onto the external thread of the motor connecting tube 24, thereby fixing the motor connecting tube 24 and the five-way tube of the bike tightly together. In order to ensure the connecting strength between the housing 11 and the five-way tube 5, a reinforcing plate 27 is connected in this example between the housing 11, the motor connecting tube 24 and the five-way tube, with one end of the reinforcing plate 27 locked tightly onto the housing 11 via a screw and the other end thereof disposed around the motor connecting tube 24 and pressed tightly onto the end of the five-way tube by the locknut 25.

The motor connecting tube 24 is provided inside rotatably with a central shaft 1 via the bearing 8 (naturally this central shaft 1 also goes through the five-way tube of the bike), with a chain wheel 2 disposed around this central shaft 1; in the actual application, a drive chain is mounted between this chain wheel 2 and a rear flywheel of the bike. With a shaft sleeve 3 also disposed around the central shaft 1, this shaft sleeve 3 will be deformed circumferentially when subjected to a circumferential torsional force. The shaft sleeve 3 is fixed at one end relative to the central shaft 1 via the spline 23, and fixed at the other end relative to the chain wheel 2. The shaft sleeve 3 is provided with a torque sensing assembly that can sense magnitude of the circumferential torsional force to which the shaft sleeve is subjected, the torque sensing assembly being connected to a motor controller of the bike via an outlet device.

The torque sensing assembly can take various structural forms in the prior art, such as the structural form of pasting a resistance strain gauge. The torque sensing assembly in this example takes the following structural form: The shaft sleeve 3 is provided on the wall in the circumferential direction with a non-closed notch 301, which is provided on one side with a torque sensing magnet steel 4 and on the other side with a Hall torque sensor 5 corresponding thereto, with the Hall element in this Hall torque sensor 5 disposed on the side thereof close to the torque sensing magnet steel 4; a torque signal output line 9 is connected to the Hall torque sensor 5.

In this example, there are totally two torque sensing magnet steels 4 that are rare earth magnet steels. These two rare earth magnet steels are arranged side by side with opposite polarity.

In the actual application, a crank needs to be mounted on both ends of the central shaft 1, with a pedal mounted on the crank. When a cyclist pedals with feet to drive the central shaft 1 to rotate, the central shaft 1 transfers the torsional force to which it is subjected to the left end of the shaft sleeve 3 shown in Fig. 1 via the spline 23; the shaft sleeve 3 is circumferentially twisted and deformed when subjected to a torsional force, thus making the relative position of the torque sensing magnet steel 4 and the Hall torque sensor 5 changed, and then making the Hall torque sensor 5 sense this torque signal and transfer it via the outlet device to the motor controller 26, which will adjust the operational parameters of the motor after processing the torque signal. The more powerfully the cyclist pedals, the greater the torsional force to which the shaft sleeve 3 is subjected will be, the more the shaft sleeve 3 will be deformed, and the stronger the torque signal sensed by the Hall torque sensor 5 will be.

The outlet device in this example, having a very ingenious structure, is composed of a movable magnetic core 6a, a movable coil 6b fixed on the movable magnetic core, a static magnetic core 7a, and a static coil 7b fixed on the static magnetic core, which are all of an annular structure; wherein the movable magnetic core 6a is fixedly mounted at the end of the shaft sleeve 3 via a movable seat board 6d, the static magnetic core 7a is fixed to the base 20 (with the base 20 fixed relative to the five-way tube of the bike, the static magnetic core 7a is naturally also fixed relative to the five-way tube of the bike), the movable magnetic core 6a fits in contact with the static magnetic core 7a and is rotatable relative thereto, the movable coil 6b is connected to the torque sensing assembly via a movable coil lead 6c, and the static coil 7b is connected to the motor controller 26 via a static coil lead 7c.

In this example, the static magnetic core 7a is fixed onto the base 20 in the following specific way: The static magnetic core 7a is fixed circumferentially into three positioning holes on the base 20 via three positioning blocks 30; besides, in order to guarantee the closeness level between the static magnetic core 7a and the base 20, in this example three annularly distributed springs 31 are provided between the static magnetic core 7a and the base 20, applying an axial elastic force to the static magnetic core 7a toward the direction of the movable magnetic core 6a.

The movable magnetic core 6a and the static magnetic core 7a, both having a U-shaped axial section (having an open face), fit to each other to compose an annular structure having a mouth-shaped axial section, in which the movable coil 6b and the static coil 7b are accommodated.

With the open faces of the static magnetic core 7a and the movable magnetic core 6a fitting to each other to compose a closed structure, the static coil 7b and the movable coil 6b are both in a closed magnetic circuit, which is equivalent to a transformer, with the static coil 7b equivalent to the primary side of the transformer while the movable coil 6b equivalent to the secondary side of the transformer. In the actual application, first a certain amount of alternating current needs to be applied to the primary side (the static coil) of the transformer via the motor controller 26, then a certain proportion of alternating current will be induced by the secondary side (the movable coil) of the transformer, and then this induced alternating current is applied to the torque sensing assembly that is the load of this transformer, with the magnitude of the load changed with the magnitude of the torque force to which the central shaft is subjected; therefore, the motor controller 26 can read the magnitude of this load via the primary side (the static coil) of the transformer, thus obtaining the magnitude of the torque sensed by the torque sensing assembly. Based on this principle, we can be very easy to transfer the torque signal sensed by the torque sensing assembly to the motor controller, with the motor controller adjusting the output power of the motor according to the magnitude of this torque signal.

In this example, the movable coil 6b is fixed to the movable magnetic core 6a by glue, and so is the static coil 7b fixed to the static magnetic core 7a.

In the actual application, with sliding friction generated between the movable magnetic core 6a and the static magnetic core 7a because of the relative rotation, in order to avoid reduced life of the movable magnetic core 6a and the static magnetic core 7a due to the direct contact friction, in this example a sticker 29 is bonded on a surface of the movable magnetic core 6a and the static magnetic core 7a where they fit in contact with each other; there are totally two stickers 29, with one pasted to the movable magnetic core 6a while the other pasted to the static magnetic core 7a, thus making the movable magnetic core 6a and the static magnetic core 7a not contacting each other directly, with the sticker 29 having good wear resistance.

Besides, in this example an annular magnet steel seat 32, fixed on the movable seat board 6d, is provided with a speed sensing magnet steel 21 (obviously the annular magnet steel seat 32 is fixed relative to the movable magnetic core 6a), and the base 20 is provided with a Hall speed sensor 22 corresponding to the speed sensing magnet steel 21, this Hall speed sensor being also provided inside with a Hall element like the Hall torque sensor 5. When the central shaft 1 drives the shaft sleeve 3 and a movable slidable seat 6 to rotate, the speed sensing magnet steel 21 rotates therewith, while the Hall speed sensor 22 fixed on the base 20 keeps static, making the Hall speed sensor 22 sense the rotational speed of the central shaft 1, thus attaining the purpose of detecting a pedaling speed signal. With the Hall speed sensor 22 fixed to the base 20 and the base 20 fixed to the five-way tube of the bike, the speed sensing magnet steel 21 is naturally fixed relative to the five-way tube of the bike.

In this example, there are totally 20 speed sensing magnet steels 21, which are uniformly distributed in a circular form on the annular magnet steel seat 32. The annular magnet steel seat 32 can output 20 pulse signals to the Hall speed sensor 22 in each turn it rotates, thus attaining the purpose of detecting a pedaling speed signal.

This electric-bike central motor in this example also includes a stator 12 and a rotor 13 disposed inside the housing 11, and a motor shaft tooth 14 fixed on the rotor 13, with the motor shaft tooth 14 connected in transmission to the chain wheel 2 via a gear reduction mechanism. After the motor is powered on, the rotor 13 drives the motor shaft tooth 14 to rotate, which drives the chain wheel 2 to rotate via the gear reduction mechanism and then drives the bike to go forward.

An inner-rotor outer-stator structure is adopted in this example.

The gear reduction mechanism may take various structural forms well known to those skilled in the art. The gear reduction mechanism in this example takes a two-stage reduction structure, whose detailed structure is as follows: The gear reduction mechanism comprises a nylon gear 15 engaging with the motor shaft tooth 14, a small gear 16 coaxially connected with the nylon gear 15, and a big gear 17 engaging with the small gear 16, the big gear 17 and the chain wheel 2 being fixed. The motor shaft tooth 14 and the nylon gear 15 constitute the first stage reduction, both using helical gear drive; the small gear 16 coaxially connected with the nylon gear 15 and the big gear 17 connected with the chain wheel 2 constitute the second stage reduction, both using straight teeth drive. This product, through the two-stage gear reduction, reduces the rotational speed from 4000 rpm to 100 rpm before driving the chain wheel of the bike directly. The terms "small" and "big" used for the small gear and the big gear of the present invention are relative.

In order to ensure that the central shaft 1 does not follow to rotate when the rotor 13 drives the chain wheel 2 to rotate, in this example a first one-way bearing 18 is mounted between the shaft sleeve 3 and the big gear 17, and includes a bearing inner ring and a bearing outer ring locked one way with the former, wherein the bearing outer ring is fixed to the big gear 17, while the bearing inner ring is fixed to the end of the shaft sleeve 3. It is thus clear that the chain wheel 2 is not connected to the central shaft 1 directly, but connected to the central shaft 1 via the big gear 17, the first one-way bearing 18 and the shaft sleeve 3. When the motor is powered on to drive the rotor 13 to rotate, the inner ring and the outer ring of the first one-way bearing 18 are separated from each other and can rotate relatively, and thus the shaft sleeve 3 and the central shaft 1 will not follow the pedal to rotate. However, when the electric bike is ridden by manpower, so long as the riding speed exceeds the electric drive speed (the electric drive speed is zero when the electric bike is ridden by pure manpower), the inner and outer rings of the first one-way bearing 1 will be in the closed state (one-way locking), which allows the electric bike to be normally ridden just like a common bike.

In order to reduce the riding resistance when manpower is used, in this example a second one-way bearing 19 is also disposed between the small gear 16 and the nylon gear 15, and includes a bearing inner ring and a bearing outer ring locked one way with the former, wherein the bearing outer ring is fixed to the nylon gear 15, while the bearing inner ring is fixed to the small gear 16. When the electric bike is ridden by manpower, the chain wheel 2 will drive the small gear 16 to rotate via the big gear, when the inner and outer rings of the second one-way bearing 19 are separated from each other and will not drive the nylon gear 15 and the rotor motor 13 to rotate, thus ensuring easier riding; however, when the motor is powered on, so long as the electric drive speed exceeds the manpower riding speed, the second one-way bearing 19 will be in the closed state, thus ensuring that the electric drive force can be transferred to the chain wheel 2. Besides, ball bearings (not labeled in the drawing) are also provided in this example between the small gear 16 and the nylon gear 15 that are arranged coaxially with the second one-way bearing 19, thus sharing part of the radial force for the second one-way bearing 19.

Certainly, the above examples are used only for explaining the technical concept and characteristics of the present invention. They are provided to make people understand and implement the present invention, but do not limit the scope of protection of the present invention.

## Claims

1. A torque sensing device of an electric-bike central motor, comprising a central shaft (1) going through a five-way tube of the bike, a shaft sleeve (3) that is disposed around this central shaft and will be circumferentially deformed when subjected to a circumferential torsional force, and a chain wheel (2) disposed around the shaft sleeve, the shaft sleeve (3) being provided with a torque sensing assembly that can sense magnitude of the circumferential torsional force to which the shaft sleeve is subjected, the torque sensing assembly being connected to a motor controller (26) of the bike via an outlet device,
**characterized in that**:
the outlet device is composed of a movable magnetic core (6a), a movable coil (6b) fixed on the movable magnetic core, a static magnetic core (7a), and a static coil (7b) fixed on the static magnetic core, which are all of an annular structure, wherein the movable magnetic core (6a) is fixed to the shaft sleeve (3), the static magnetic core (7a) is fixed relative to the five-way tube of the bike, the movable magnetic core (6a) fits in contact with the static magnetic core (7a) and is rotatable relative thereto, the movable coil (6b) is connected to the torque sensing assembly via a movable coil lead (6c), and the static coil (7b) is connected to the motor controller (26) via a static coil lead (7c), wherein the movable magnetic core (6a) is mounted on the shaft sleeve (3) via a movable seat board (6d).

2. An electric-bike central motor of the torque sensing device according to claim 1, wherein it includes a motor connecting tube (24) fixedly going through the five-way tube of the bike, and a housing (11) and a base (20) integrated with the motor connecting tube (24); the base (20) is provided with three annularly distributed positioning holes, in which are fixed circumferentially the static magnetic core (7a) via three positioning blocks (30).

3. An electric-bike central motor according to claim 2, wherein three annularly distributed springs (31) are provided between the static magnetic core (7a) and the base (20), applying an axial elastic force to the static magnetic core (7a) toward the direction of the movable magnetic core (6a).

## Patentansprüche

1. Drehmomentsensorvorrichtung eines Zentralmotors von einem Elektrofahrrad, umfassend eine zentrale Welle (1), die durch ein Fünf-Wege-Rohr des Fahrrads verläuft, eine Wellenhülse (3), die um diese zentrale Welle herum angeordnet ist und die bei Einwirkung einer Umfangsdrehmomentkraft in Umfangsrichtung verformt wird, und ein um die Wellenhülse herum angeordnetes Kettenrad (2), wobei die Wellenhülse (3) mit einer Drehmomentsensor-Anordnung versehen ist, die die Größe der Umfangsdrehmomentkraft, die auf die Wellenhülse einwirkt, erfassen kann, wobei die Drehmomentsensor-Anordnung über einen Ausgangsvorrichtung mit einem Motor-Controller (26) des Fahrrads verbunden ist,
**dadurch gekennzeichnet, dass**:
der Ausgangsvorrichtung aus einem beweglichen Magnetkern (6a), eine bewegliche Spule (6b), die auf dem beweglichen Magnetkern befestigt ist, ein statischer Magnetkern (7a) und eine statische Spule (7b), die auf dem statischen Magnetkern befestigt ist, zusammengesetzt ist und die alle eine ringförmige Struktur aufweisen, wobei der bewegliche Magnetkern (6a) an der Wellenhülse (3) befestigt ist, der statische Magnetkern (7a) relativ zum Fünf-Wege-Rohr des Fahrrads befestigt ist, der bewegliche Magnetkern (6a) in Kontakt mit dem statischen Magnetkern (7a) einpasst und relativ dazu drehbar ist, die bewegliche Spule (6b) über eine bewegliche Spulenwicklung (6c) mit der Drehmomentsensor-Anordnung verbunden ist, und die statische Spule (7b) über eine statische Spulenwicklung (7c) mit dem Motor-Controller (26) verbunden ist, wobei der bewegliche Magnetkern (6a) über eine bewegliche Sitzplatte (6d) an der Wellenhülse (3) befestigt ist.

2. Zentralmotor eines Elektrofahrrads von einer Drehmomentsensorvorrichtung nach Anspruch 1, wobei der Zentralmotor ein Motorverbindungsrohr (24), das fest durch das Fünf-Wege-Rohr des Fahrrads verläuft, und ein Gehäuse (11) und eine mit dem Motorverbindungsrohr (24) integrierte Basis (20) beinhaltet; die Basis (20) mit drei ringförmig verteilten Positionierungslöchern versehen ist, in denen der statische Magnetkern (7a) über drei Positionierungsblöcke (30) in Umfangsrichtung befestigt ist.

3. Zentralmotor eines Elektrofahrrads nach Anspruch 2, wobei drei ringförmig verteilte Federn (31) zwischen dem statischen Magnetkern (7a) und der Basis (20) vorgesehen sind, die eine axiale elastische Kraft auf den statischen Magnetkern (7a) in Richtung des beweglichen Magnetkerns (6a) ausüben.

## Revendications

1. Dispositif de détection de couple d'un moteur central de vélo électrique, comprenant un arbre central (1) traversant un tube à cinq voies du vélo, un manchon d'arbre (3) qui est disposé autour de cet arbre central et est circonférentiellement déformé lorsqu'il est soumis à une force de torsion circonférentielle, et une roue à chaîne (2) disposée autour du manchon d'arbre, le manchon d'arbre (3) étant prévu avec un ensemble de détection de couple qui peut détecter la grandeur de la force de torsion circonférentielle à laquelle le manchon d'arbre est soumis, l'ensemble de détection de couple étant raccordé à un organe de commande de moteur (26) du vélo via un dispositif de sortie, **caractérisé en ce que** :
le dispositif de sortie est composé d'un noyau magnétique mobile (6a), une bobine mobile (6a) fixée sur le noyau magnétique mobile, un noyau magnétique statique (7a) et une bobine statique (7b) fixée sur le noyau magnétique statique, qui présentent tous une structure annulaire, dans lequel le noyau magnétique mobile (6a) est fixé sur le manchon d'arbre (3), le noyau magnétique statique (7a) est fixé par rapport au tube à cinq voies du vélo, le noyau magnétique mobile (6a) se monte en contact avec le noyau magnétique statique (7a) et peut tourner par rapport à ce dernier, la bobine mobile (6b) est raccordée à l'ensemble de détection de couple via un fil de bobine mobile (6c), et la bobine statique (7b) est raccordée à l'organe de commande de moteur (26) via un fil de bobine statique (7c), dans lequel le noyau magnétique mobile (6a) est monté sur le manchon d'arbre (3) via une plaque de siège mobile (6d).

2. Moteur central de vélo électrique du dispositif de détection de couple selon la revendication 1, dans lequel il comprend un tube de raccordement de moteur (24) traversant, de manière fixe, le tube à cinq voies du vélo, et un boîtier (11) et une base (20) intégrée avec le tube de raccordement de moteur (24) ; la base (20) est prévue avec trois trous de positionnement répartis de manière annulaire, dans lesquels est fixé, de manière circonférentielle, le noyau magnétique statique (7a), via trois blocs de positionnement (30).

3. Moteur central de vélo électrique selon la revendication 2, dans lequel trois ressorts (31) répartis de manière annulaire sont prévus entre le noyau magnétique statique (7a) et la base (20), appliquant une force élastique axiale sur le noyau magnétique statique (7a) vers la direction du noyau magnétique mobile (6a).
